# EUROPÄISCHE PATENTSCHRIFT

(11) **EP 1 757 851 B1**
(45) Veröffentlichungstag und Bekanntmachung des Hinweises auf die Patenterteilung: **04.05.2011**
(21) Anmeldenummer: 06017626.0
(22) Anmeldetag: 24.08.2006
(51) Int. Cl.: F16K 27/02, F16K 1/226, F16K 7/07

(54) **Lüftungsklappengehäuseanordnung sowie hierin einsetzbares Dichtungsausgleichselement**
Air shutter casing device and mountable sealing compensation element
Dispositif pour un boîtier d'un clapet d'aération et élément installable de compensation d'étanchéité

(30) Priorität: 24.08.2005 DE 102005040234
(43) Veröffentlichungstag der Anmeldung: 28.02.2007
(73) Patentinhaber: Beck, Klaus, 64546 Mörfelden-Walldorf (DE)
(72) Erfinder: Beck, Klaus, 64546 Mörfelden-Walldorf (DE)
(74) Vertreter: Schubert, Siegmar

(56) Entgegenhaltungen:
- DE-A1- 10 229 944
- GB-A- 1 217 605
- US-A- 2 340 144
- US-A- 3 291 443
- US-A- 3 376 014

## Beschreibung

Die Erfindung betrifft eine Lüftungsklappengehäuseanordnung nach dem Oberbegriff des Anspruchs 1.

Ein wesentlicher Aspekt der Erfindung betrifft ein Dehnungsausgleichselement einer in eine solche Lüftungsklappengehäuseanordnung einsetzbaren Bauart.

In Rohrsystemen von Lüftungsanlagen insbesondere für Zu- und Abluft in der chemischen Industrie und im Laborlüftungsbereich sind aus der Praxis Lüftungsklappengehäuseanordnungen gemäß dem Oberbegriff des Anspruchs 1 bekannt, in deren Gehäuse ein einstellbares Klappenblatt bzw. eine Drosselklappe zwischen zwei Durchgangsöffnungen angeordnet ist, die entsprechend der Nennweite anzuschließender Rohre ausgebildet und dimensioniert sind. Zum Einbau der Lüftungsklappengehäuseanordnung sollen die anzuschließenden Rohre mit den Durchgangsöffnungen fluchten und die Lüftungsklappengehäuseanordnung soll genau zwischen die anzuschließenden Rohre passen. Dies kann einen erheblichen Montageaufwand erfordern. Weiterhin können im montierten Zustand der Lüftungsklappengehäuseanordnung durch thermisch bedingte Längenänderungen in dem Rohrsystem die Anschlüsse der Lüftungsklappengehäuseanordnung belastet werden und die lichte Weite der angeschlossenen Rohre kann sich strömungswiderstandserhöhend verengen. - Im Betriebsfall soll im geöffneten Zustand der Lüftungsklappe Luft möglichst widerstandsfrei durch die Gehäuseklappengehäuseanordnung strömen. Andererseits soll die Lüftungsklappe in geschlossener Stellung dicht schließen.

Eine bekannte Klappengehäuseanordnung eines Klappenventils umfasst einen Ventilkörper, der aus einem festen Ring und einem zylindrischen elastischen Manschetteneinsatz für den Ring besteht, sowie eine drehbare Absperrscheibe, die mit ihrem Rand zur dichten Anlage an der inneren Oberfläche des elastischen Manschetteneinsatzes gedreht werden kann (GB-A-1217605). Um die Herstellung und Montage eines solchen Klappenventils zu vereinfachen, hat der Manschetteneinsatz die Form eines einstückigen Schlauchs, dessen axiale Länge beträchtlich größer als die des Rings ist, aus dem er beidseitig herausragt. Der Anschluss des Klappenventils an ein Rohrleitungsnetz erfolgt lediglich über Anschlussstücke, die durch das beiderseits des Rings aus diesem herausragenden Manschetteneinsatz gebildet werden. Die drehbare Absperrscheibe ist mittels quer zur axialen Richtung des Schlauchs angeordneten Zapfen, die durch Löcher in dem Manschetteneinsatz hindurchreichen, drehbar gelagert. Die Zone des Gehäuses, die den Manschetteneinsatz aufnimmt, und die Zone des Manschetteneinsatzes, die von dem Gehäuse eingeschlossen ist, sind somit ringförmig zylindrisch. Vorzugsweise ist der Innendurchmesser des Rings kleiner als der Außendurchmesser des Manschetteneinsatzes im spannungslosen Zustand, so dass bei Innendruck der Manschetteneinsatz stärker in dem Ring fixiert wird. Zu dem gleichen Zweck und zur Verbesserung der Abdichtung kann der Ring innen nahe seinen Enden mit jeweils einer ringförmigen Vertiefung oder Erhebung ausgeformt sein, die in den Manschetteneinsatz eingreift. Anpassungen der Klappengehäuseanordnung an ein existierendes Rohrnetz zur Montage können durch Abschneiden der Anschlussstücke des rohrförmigen Manschetteneinsatzes erfolgen.

Der vorliegenden Erfindung liegt die Aufgabe zugrunde, eine Lüftungsklappengehäuseanordnung zu schaffen, die unkompliziert in einem Rohrsystem auch dann montiert werden kann, wenn die zu verbindenden Rohre nicht genau fluchten, und keinen im Abstand der Durchgangsöffnungen der Lüftungsklappengehäuseanordnung genau entsprechenden Einbauabstand aufweisen, und die nach Montage Längen-/Fluchtungsänderungen, die insbesondere durch Wärme verursacht sind, praktisch ohne Nennweitenänderung ausgleicht, wobei die einstellbare Drosselfunktion der Lüftungsklappe unbeeinträchtigt bleiben soll, die insbesondere vollständig schließen soll.

Diese Aufgabe wird durch die Lüftungsklappengehäuseanordnung mit den Merkmalen des Anspruchs 1 gelöst.

Demgemäß umfaßt die Lüftungsklappengehäuseanordnung ein Dehnungsausgleichselement in Form eines elastischen Manschetteneinsatzes, der geeignet ist, Abstands-/Fluchtungsfehler von Rohrenden, die über die Lüftungsklappengehäuseanordnung zu verbinden sind, bei der Montage ohne Nennweitenänderung auszugleichen und daran anschließend in montiertem Zustand Längen-/Fluchtungsänderungen bzw. Versatz störungsfrei aufzunehmen. Hierzu ist der Manschetteneinsatz mit einer zentralen Kugelzone ausgebildet, an der auf zwei gegenüberliegenden Seiten außen zwei zylindrische Stutzen bzw. Muffen angeformt sind. Die angeformten Stutzen bzw. Muffen ermöglichen den Anschluß der Lüftungsklappengehäuseanordnung an zylindrischen Enden von handelsüblichen Kunststoff- oder Stahlrohren sowie das Anbringen von Muffenflanschen an der fertig hergestellten Lüftungsklappengehäuseanordnung. Zur Fertigstellung der Lüftungsklappengehäuseanordnung ist der Manschetteneinsatz in ein Gehäuse einzusetzen, welches zwischen zwei Durchgangsöffnungen eine Kugelzone aufweist, die entsprechend der Kugelzone des Manschetteneinsatzes so ausgebildet ist, daß dieser mit Pass-Sitz verschiebungsfrei in dem Gehäuse angebracht ist. Das Gehäuse besteht aus einem Material, welches steifer als dasjenige des eingesetzten Manschetteneinsatzes ist und verleiht dem Manschetteneinsatz Formstabilität, insbesondere in dem Bereich, in dem eine in den Manschetteneinsatz eingesetzte Lüftungsklappe, die in dieser sowie in dem Gehäuse drehbar gelagert ist, im geschlossenen Zustand zur Anlage gelangt, und zwar auch dann, wenn die an den Manschetteneinsatz beidseitig angeformten zylindrischen Stutzen bzw. Muffen, insbesondere durch Wärmeausdehnung der angeschlossenen Rohre belastet werden. Im geöffneten Zustand der Lüftungsklappe ermöglicht die Kugelzone des Manschetteneinsatzes eine annähernd widerstandsfreie Luftführung gleich einer Diffusorwirkung mit turbulenzfreier Strömung der Luft an der Innenwand. Weiterhin ermöglicht die Kugelform bzw. Kugelzonenform des zentralen Bereichs des Manschetteneinsatzes sowie der kugelzonenförmigen Ausbildung des äußeren Gehäuses eine praktisch beliebige räumliche Einbaulage, ohne eine Querschnittsveränderung bei Wärmeausdehnung des Rohrleitungssystems herbeizuführen.

Zwischen der Kugelzone und den Stutzen bzw. Muffen des Manschetteneinsatzes ist je ein ringförmiger vertiefter Übergangsbereich ausgeformt. Diese Übergangsbereiche dienen bei der Montage zur Markierung, wie weit die zu verbindenden Rohre aufgeschoben werden sollen, und weisen hierzu vorzugsweise außen einen verdickten Anschlag gemäß Anspruch 12 auf. Die ringförmige vertiefte Übergangsbereiche sind außerdem Hauptverformungsbereiche bei Belastung der zylindrischen Stutzen bzw. Muffen des Manschetteneinsatzes, insbesondere durch Wärmeeinfluß auf die angeschlossenen Rohre, ohne die lichten Querschnitte innerhalb des Manschetteneinsatzes an störender Stelle erheblich zu verändern.

In kompakter Bauweise besteht das äußere Gehäuse im wesentlichen nur aus dessen Kugelzone, welche gemäß Anspruch 4 ein Klappenwellenlager und ein erweitertes Endlager zur Lagerung des Klappenblatts ausweisen kann.

Gemäß Anspruch 2 sind die Kugelzonen des Gehäuses und des Manschetteneinsatzes bevorzugt symmetrisch zu einer gemeinsamen Mittelebene angeordnet und eine virtuelle Drehachse des Klappenblatts verläuft ebenfalls in der Mittelebene quer zur Längsrichtung der Lüftungsklappengehäuseanordnung. Dabei sind der Manschetteneinsatz und das Gehäuse außerdem im wesentlichen - abgesehen von der Lagerung des Klappenblatts - rotationssymmetrisch zu der mittleren Längsachse der Gehäuseanordnung geformt. Diese Gehäuseanordnung ist kompakt, bewirkt eine gute Formstabilität des Manschetteneinsatzes und gewährleistet insbesondere ein vollständiges Schließen der Lüftungsklappe.

Zur Lagerung des Klappenblatts sind an außen gegenüberliegenden Stellen des Manschetteneinsatzes quer zur Längsrichtung ein Wellendurchgang, der als Aushalsung geformt ist, sowie ein Endlager ausgebildet. Diese Elemente wirken mit einer Ausbildung des Gehäuses nach Anspruch 4 zusammen, welches das Klappenwellenlager aufweist, das im eingesetzten Zustand des Manschetteneinsatzes mit dessen Wellendurchgang fluchtet, sowie gegenüberliegend das erweiterte Endlager aufweist, welches das Endlager des Manschetteneinsatzes aufnimmt. Das Endlager und der Wellendurchgang des Manschetteneinsatzes sind zweckmäßig an den Manschetteneinsatz luftdicht angespritzt. Zusammen mit dem Klappenwellenlager des Gehäuses und dessen erweiterten Endlager kann die Klappe in der Gehäuseanordnung luftdicht gelagert werden, wodurch sich die Lüftungsklappengehäuseanordnung auch besonders zur Anwendung in Lüftungsbereichen der chemischen Industrie bzw. im Laborlüftungsbereich eignet.

In die weiter oben genannten ringförmigen vertieften Übergangsbereiche des Manschetteneinsatzes paßt bevorzugt je eine Noppe an dem inneren Rand der Öffnungen des Gehäuses, womit der verschiebungsfreie Pass-Sitz des Manschetteneinsatzes in dem Gehäuse gewährleistet werden kann.

Das äußere Gehäuse ist fertigungsgünstig aus Kunststoff gespritzt oder extrudiert. Alternativ hierzu kann es aber auch aus Stahl, Stahlblech oder Keramik bestehen.

Der demgegenüber flexiblere Manschetteneinsatz ist gemäß Anspruch 8 vorteilhaft aus einem Elastomer im Spritzgußverfahren oder Extrusionsverfahren hergestellt. Das Polymer kann ein Kunststoff auf EP(D)M und/oder PP-Basis oder PVC sein.

In fertigungsgünstiger Weise kann ein wesentliches Element der Lüftungsklappengehäuseanordnung, nämlich der Manschetteneinsatz, ohne die für die Lagerung des Klappenblatts vorgesehenen Formelemente und ohne äußeres Gehäuse als separates Dehnungsausgleichselement ohne Drosselfunktion verwendet werden. Demgemäß sind auf den elastischen Manschetteneinsatz als separates Dehnungsausgleichselement die Ansprüche 11 bis 15 gerichtet, welche insbesondere für den Dehnungsausgleich wirksame vorteilhafte Merkmale umfassen, die im Zusammenhang mit der Lüftungsklappengehäuseanordnung bereits weiter oben genannt wurden.
Ein Ausführungsbeispiel wird im folgenden anhand einer Zeichnung mit drei Figuren erläutert. Es zeigt:
- Figur 1: eine Lüftungsklappengehäuseanordnung mit Manschet- teneinsatz und mit Klappenblatt bzw. Drosselklappe in einer Seitenansicht, teilweise geschnitten,
- Figur 2: die Gehäuseanordnung gemäß Figur 1, jedoch ohne Manschetteneinsatz und Handsteller und
- Figur 3: den Manschetteneinsatz gemäß Figur 1 , teilweise ge- schnitten.

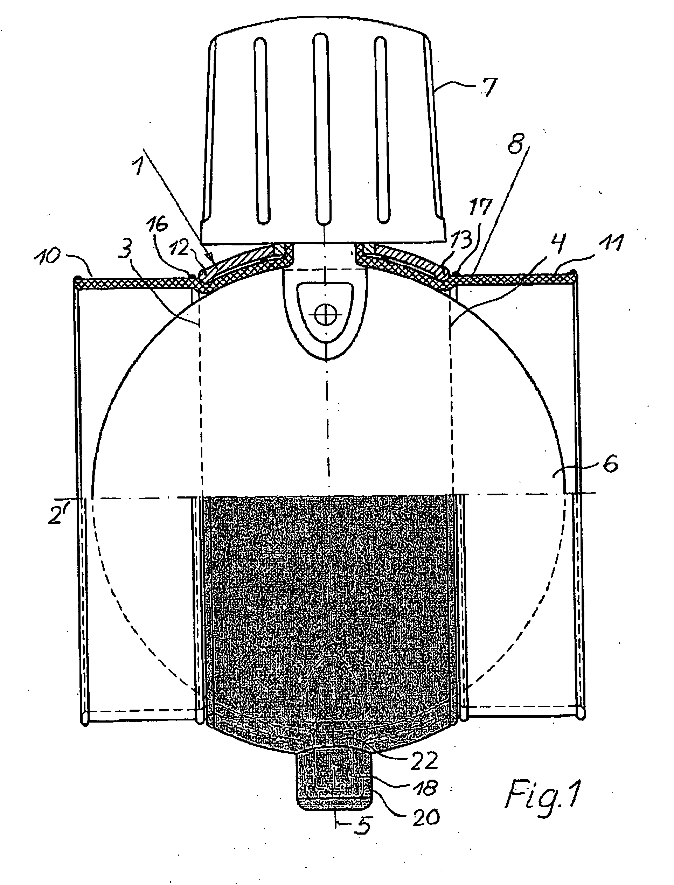

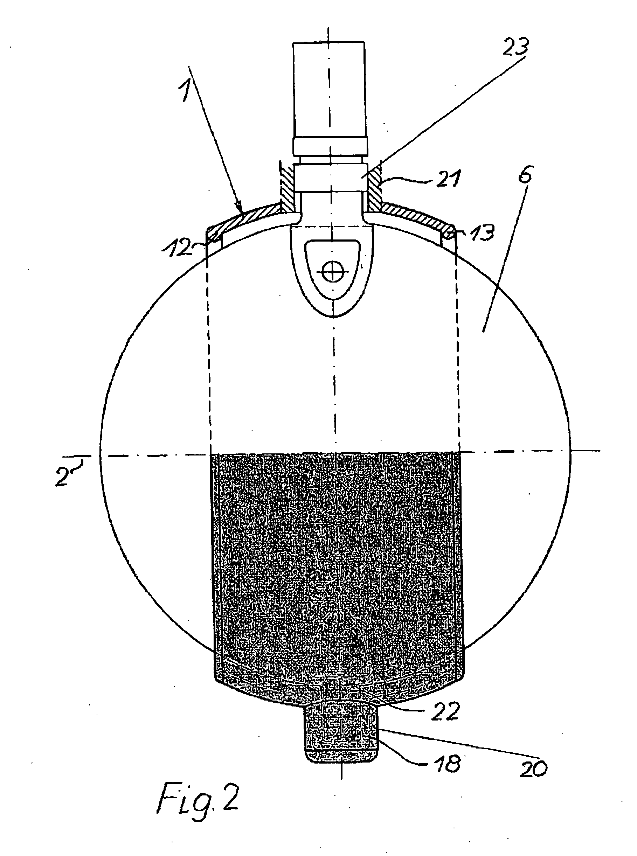

In den Figuren 1 und 2 ist mit 1 ein Gehäuse bezeichnet, welches als Kugelzone geformt ist und in Längsrichtung zwei an entgegengesetzten Enden Durchgangsöffnungen 3, 4 aufweist, die in Figur 1 mit unterbrochenen Linien angedeutet sind. Das Gehäuse 1 ist zu einer Mittelebene 5, die mit einer strichpunktierten Linie gezeigt ist und sich senkrecht zu der Zeichnungsebene erstreckt, symmetrisch ausgebildet. Die Ebenen der Durchgangsöffnungen 3, 4 können als Begrenzung der Kugelzone gedacht werden.

Das Gehäuse besteht aus einem formstabilen Material großer Festigkeit, insbesondere einem thermoplastischen Kunststoff, Stahl, Stahlblech oder Keramik.

Das Gehäuse 1 beherbergt ein rundes Klappenblatt 6, welches mit einem Handsteller 7 um eine ideelle Drehachse drehbar ist, die in der Mittelebene 5 liegt und daher kein gesondertes Bezugszeichen hat. - Auf die Lagerung des drehbaren Klappenblatts 6 wird weiter unten eingegangen.

In das Gehäuse 1 eingesetzt ist ein elastischer Manschetteneinsatz 8 aus einem Elastomer, der flexibler als das Material des äußeren Gehäuses 1 ist. Der Manschetteneinsatz 8 kann somit als inneres Gehäuse angesehen werden.

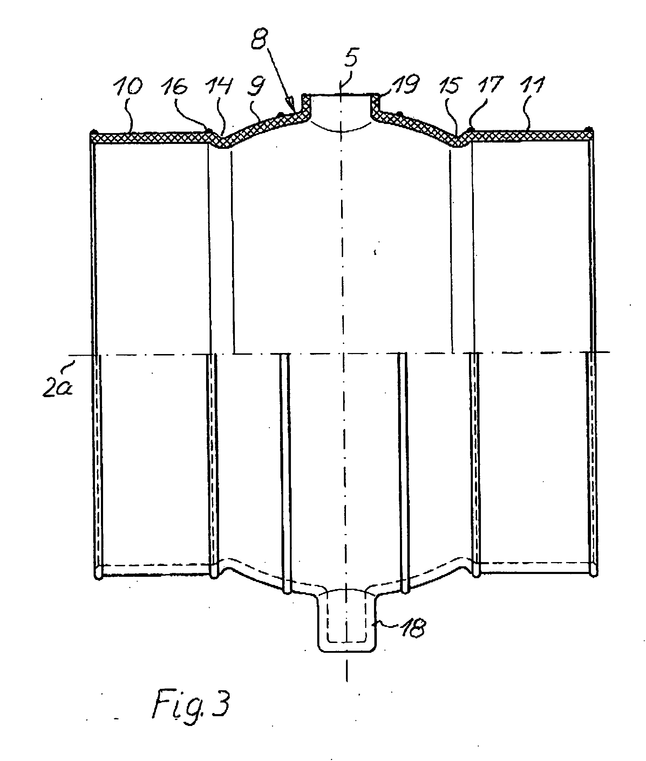

Wie im einzelnen insbesondere in Figur 3 dargestellt, ist ein zentraler Abschnitt des Manschetteneinsatzes 8 als Kugelzone 9 geformt, an die sich in Längsrichtung 2a beidseitig zwei zylindrische Stutzen 10, 11 anschließen. Die Stutzen können durch die Durchgangsöffnungen 3, 4 des Gehäuses 1 hindurch nach außen reichen, Die Kugelzone 9 des Manschetteneinsatzes 8 ist etwas kleiner als die Innenwand des Gehäuses 1, so daß der Manschetteneinsatz unter Freilassung dünner zonenförmiger Bereiche mit Pass-Sitz verschiebungsfrei in das Gehäuse 1 eingesetzt werden kann, siehe Figur 1. Zum sicheren Halten dienen ringförmige Noppen 12, 13 an den inneren Rändern der Durchgangsöffnungen 3, 4 des Gehäuses 1, die in ringförmig vertiefte Übergangsbereiche 12, 13 des Manschetteneinsatzes eingreifen, die jeweils zwischen einem der Stutzen 10, 11 und der Kugelzone 9 des Manschetteneinsatzes 8 eingreifen. Die vertieften Übergangsbereiche können auch als Einschnürungen bzw. Knicke aufgefaßt werden. Jeweils ein verdickter Anschlag 16 bzw. 17 ist in Längsrichtung 2a axial außen an einem der Übergangsbereiche 14, 15 angeformt, siehe insbesondere Figur 3. Er dient als Anschlag für ein Rohrende bzw. Muffenende, welches bis zu diesem von außen aufgeschoben werden kann.

Zur Verwendung als inneres Gehäuse der Lüftungsklappengehäuseanordnung mit einstellbarer Lüftungsklappe sind aus der Kugelzone 9 des Manschetteneinsatzes 8 quer zur Längsrichtung 2a in der ideellen Drehachse in der Mittelebene 5 unten ein geschlossenes Endlager 18 und oben ein Wellendurchgang bzw. eine Aushalsung 19 luftdicht angespritzt. Beim Einsetzen des Manschetteneinsatzes 8 in das Gehäuse 1 kann das Endlager 18 von einem erweiterten Endlager 20 des Gehäuses 1 aufgenommen werden und der Wellendurchgang kann mit einem Klappenwellenlager 21 oben an dem Gehäuse 1 fluchten, Im eingesetzten Zustand nehmen das Endlager 18 und das erweiterte Endlager 20 einen unteren Endlagerwellenstutzen 22 auf. Ein oberer Klappenwellenstutzen 23, der an dem Klappenblatt 6 nach dessen Einbringung in den Manschetteneinsatz befestigt werden kann, reicht durch das obere Klappenwellenlager 21 hindurch, in dem er einen dichten Abschluß des Inneren des Manschetteneinsatzes 8 bildet. Schließlich wird auf den oberen Klappenwellenstutzen 23 der Handsteller 24 aufgesetzt.

Nach Einbau der montierten Lüftungsklappengehäuseanordnung mit Klappenblatt 6 können die Stutzen 10, 11 bzw. entsprechende Muffen an zylindrische Enden von handelsüblichem Kunststoff oder Stahlrohren angeschlossen werden, auch wenn diese gegeneinander versetzt sind und nicht genau den durch die Lüftungsklappengehäuseanordnung definierten Zwischenraum begrenzen. Derartige Abweichungen werden ohne weiteres von dem Manschetteneinsatz 8 aufgenommen, ohne eine signifikante Querschnittsveränderung durch Verformung in den Stutzen 10, 11 sowie zumindest an der Mittelebene 5 der Kugelzone 9 des Manschetteneinsatzes 8 herbeizuführen. Vielmehr werden allfällige Verformungen primär durch die vertieften Übergangsbereiche 14, 15 aufgenommen.

In vorteilhafter Weise ergibt die Kombination des äußeren Gehäuses 1 mit dem elastischen Manschetteneinsatz eine dicht schließende Drosselklappenanordnung in jedem Regulierungsbereich auch zur Erfüllung von Normvorschriften (DIN) sowie außerdem mit Kompensatorwirkung als Dehnungsausgleich.

Bei der Verwendung des Manschetteneinsatzes 8 nur als Kompensator zum Dehnungsausgleich, die ebenfalls möglich ist, entfällt der Wellendurchgang 19, der ansonsten geschlossen sein müsste, und auch das Endlager 18 kann entfallen.

Die erforderliche elastische Eigenschaft des Manschetteneinsatzes wird durch Herstellung aus einem Kunststoff auf EP(D)M, PP-Basis oder PVC in fertigungsgünstiger Weise erreicht.

### Bezugszahlenliste

- 1: (äußeres) Gehäuse
- 2, 2a: Längsrichtung
- 3: Durchgangsöffnung
- 4: Durchgangsöffnung
- 5: Mittelebene
- 6: Klappenblatt
- 7: Handsteller
- 8: Manschetteneinsatz
- 9: Kugelzone
- 10: Stutzen
- 11: Stutzen
- 12: Noppe
- 13: Noppe
- 14: vertiefter Übergangsbereich
- 15: vertiefter Übergangsbereich
- 16: verdickter Anschlag
- 17: verdickter Anschlag
- 18: Endlager
- 19: Wellendurchgang
- 20: erweitertes Endlager
- 21: Klappenwellenlager
- 22: unterer Endlagerwellenstutzen
- 23: Klappenwellenstutzen

## Patentansprüche

1. Lüftungsklappengehäuseanordnung mit einem Gehäuse (1), in dem ein einstellbares Klappenblatt (6) zwischen zwei Durchgangsöffnungen (3, 4) angeordnet ist,
wobei das Gehäuse (1) eine Zone zwischen den beiden Öffnungen (3, 4) aufweist,
in die ein elastischer Manschetteneinsatz (8) mit Pass-Sitz verschiebungsfrei eingesetzt ist,
wobei der Manschetteneinsatz (8) mit einer zentralen Zone (9) ausgebildet ist, die in eingesetztem Zustand im wesentlichen von der Zone des Gehäuses (1) eingeschlossen ist,
wobei an der zentralen Zone (9) des Manschetteneinsatzes (8) auf zwei gegenüber liegenden Seiten zylindrische Stutzen (10, 11) bzw. Muffen angeformt sind, die im eingesetzten Zustand des Manschetteneinsatzes aus je einer der Durchgangsöffnungen (3, 4) des Gehäuses herausragen, und
wobei der Manschetteneinsatz (8) das Klappenblatt (6) drehbar aufnimmt, welches in einer geschlossenen Stellung an einer Innenwand der zentralen Zone (9) des Manschetteneinsatzteils (8) dicht anliegt und somit die beiden Stutzen (10, 11) bzw. Muffen gegeneinander abdichtet,
**dadurch gekennzeichnet,**
**dass** das Gehäuse (1) im wesentlichen aus einer Kugelzone besteht,
**dass** die zentrale Zone (9) des Manschetteneinsatzes (8) eine Kugelzone ist, und
**dass** zwischen der Kugelzone (9) des Manschetteneinsatzes (8) und den Stutzen (10, 11) bzw. Muffen des Manschetteneinsatzes (8) je ein ringförmiger vertiefter Übergangsbereich (14, 15) ausgeformt ist, der im eingesetzten Zustand des Manschetteneinsatzes (8) an einer der Durchgangsöffnungen (4, 5) des Gehäuses (1) angeordnet ist, und
jeweils einen Hauptverformungsbereich bei Belastung des Stutzens (10, 11) bzw. der Muffe des Manschetteneinsatzes bildet.

2. Lüftungsklappengehäuseanordnung nach Anspruch 1,
**dadurch gekennzeichnet,**
**daß** die Kugelzone des Gehäuses (1) und diejenige (9) des Manschetteneinsatzes (8) symmetrisch zu einer gemeinsamen Mittelebene (5) angeordnet sind und daß eine ideelle Drehachse des Klappenblatts (6) in der Mittelebene quer zur Längsrichtung der Lüftungsklappengehäuseanordnung verläuft.

3. Lüftungsklappengehäuseanordnung nach Anspruch 1 oder 2,
**dadurch gekennzeichnet,**
**daß** an außen gegenüberliegenden Stellen des Manschetteneinsatzes (8) quer zur Längsrichtung ein Endlager (18) und ein Wellendurchgang (19) angeordnet sind.

4. Lüftungsklappengehäuseanordnung nach Anspruch 3,
**dadurch gekennzeichnet,**
**daß** das Gehäuse (1) ein Klappenwellenlager (21) aufweist, welches im eingesetzten Zustand des Manschetteneinsatzes (8) mit dessen Wellendurchgang (19) fluchtet, sowie gegenüberliegend ein erweitertes Endlager (20) aufweist, welches das Endlager (18) des Manschetteneinsatzes (8) aufnimmt.

5. Lüftungsklappengehäuseanordnung nach einem der Ansprüche 2 bis 4,
**dadurch gekennzeichnet,**
**daß** in die ringförmig vertieften Übergangsbereiche (14, 15) des Manschetteneinsatzes (8) zwischen einem der Stutzen (10, 11) bzw. einer der Muffen und der Kugelzone (9) je eine Noppe (12, 13) an dem inneren Rand der Durchgangsöffnungen (3, 4) des Gehäuses paßt.

6. Lüftungsklappengehäuseanordnung nach Anspruch 5,
**dadurch gekennzeichnet,**
**daß** an dem ringförmigen vertieften Übergangsbereich (14, 15) des Manschetteneinsatzes (8) in Längsrichtung axial außen jeweils ein verdickter Anschlag (16, 17) angeformt ist.

7. Lüftungsklappengehäuseanordnung nach einem der vorangehenden Ansprüche,
**dadurch gekennzeichnet,**
**daß** das Gehäuse (1) aus thermoplastischem Kunststoff gespritzt oder extrudiert ist.

8. Lüftungsklappengehäuseanordnung nach einem der Ansprüche 1 bis 5,
**dadurch gekennzeichnet,**
**daß** das Außengehäuse aus Stahl, Stahlblech oder Keramik besteht.

9. Lüftungsklappengehäuseanordnung nach einem der vorangehenden Ansprüche,
**dadurch gekennzeichnet,**
**daß** der Manschetteneinsatz (8) aus Elastomer gespritzt oder extrudiert ist.

10. Lüftungsklappengehäuseanordnung nach Anspruch 9,
**gekennzeichnet durch**
ein Elastomer auf EP(D)M, PP-Basis oder aus PVC.

11. Dehnungsausgleichselement für Rohranordnungen, insbesondere im Zu- und Abluftbereich der chemischen Industrie bzw. im Laborlüftungsbereich,
welches mit den Merkmalen des Manschetteneinsatzes der Lüftungsgehäuseanordnung nach Anspruch 1 ausgeformt ist.

12. Dehnungsausgleichselement nach Anspruch 11,
**dadurch gekennzeichnet,**
**daß** an dem ringförmigen vertieften Übergangsbereich (14, 15) des Manschetteneinsatzes (8) in Längsrichtung axial außen jeweils ein verdickter Anschlag (16, 17) ausgeformt ist.

13. Dehnungsausgleichselement nach Anspruch 11 oder 12,
**dadurch gekennzeichnet,**
**daß** der Manschetteneinsatz (8) symmetrisch zu einer Mittelebene (5) durch die Kugelzone (9) aufgeformt ist.

14. Dehnungsausgleichselement nach einem der Ansprüche 11 bis 13,
**dadurch gekennzeichnet,**
**daß** der Manschetteneinsatz (8) aus einem chemikalienbeständigen Polymer besteht.

15. Dehnungsausgleichselement nach Anspruch 14,
**gekennzeichnet durch**
ein Polymer auf EP(D)M, PP-Basis oder aus PVC.

## Claims

1. Air shutter casing device comprising a casing (1) in which an adjustable shutter blade (6) is disposed between two passage openings (3, 4),
wherein the casing (1) includes a zone between the two openings (3, 4),
into which an elastic sleeve insert (8) having tight fit is displacement-free inserted,
wherein the sleeve insert (8) is formed having a central zone (9) which, in the inserted state, is substantially enclosed by the zone of the casing (1),
wherein to the central zone (9) of the sleeve insert (8), on two opposite sides, cylindrical sockets (10, 11) or couplings are attached which, in the inserted state of the sleeve insert, extend from each one of the passage openings (3, 4) of the casing, and
wherein the sleeve insert (8) revolvingly incorporates the shutter blade (8) which, in a closed position, tightly rests against an inner wall of the central zone (9) of the sleeve insert part (8) and, in this way, seals the two sockets (10, 11) or couplings relative to each other,
**characterized in**
**that** the casing (1) consists substantially of a spherical zone,
**that** the central zone (9) of the sleeve insert (8) is a spherical zone and
**that** between the spherical zone (9) of the sleeve insert (8) and each of the sockets (10, 11), or couplings, of the sleeve insert (8), one annular recessed transition area (14, 15) each is formed out which, in the inserted state of the sleeve insert (8), is arranged at one of the passage openings (4, 5) of the casing (1) and forms one main deformation area each in case of a stress on the socket (10, 11), or the coupling, of the sleeve insert.

2. Air shutter casing device according to claim 1,
**characterized in**
**that** the spherical zone of the casing (1) and the one (9) of the sleeve insert (8) are symmetrically arranged relative to a common median plane (5) and that an assumed axis of rotation of the shutter blade (6) passes in the median plane at right angles relative to the longitudinal direction of the air shutter casing device.

3. Air shutter casing device according to claim 1 or claim 2,
**characterized in**
**that** at opposite outside locations of the sleeve insert (8) at right angles relative to the longitudinal direction, an end bearing (18) and a shaft passage (19) are disposed

4. Air shutter casing device according to claim 3
**characterized in**
**that** the casing (1) includes a shutter shaft bearing (21) which, in the inserted state of the sleeve insert (8), is aligned with the shaft passage (19) of the latter, and on the opposite side includes an enlarged end bearing (20) which incorporates the end bearing (18) of the sleeve insert (8).

5. Air shutter casing device according to one of claims 2 to 4,
**characterized in**
**that** into the annular recessed transition areas (14, 15) of the sleeve inserts (8), between one of the sockets (10, 11), or one of the couplings, and the spherical zone (9) one knob each (12, 13) fits to the inner edge of the passage openings (3, 4) of the casing.

6. Air shutter casing device according to claim 5,
**characterized in**
**that** one thickened stop (16, 17) each is provided at the annular recessed transition area (14, 15) of the sleeve insert (8), in the longitudinal direction axially outside.

7. Air shutter casing device according to one of the foregoing claims,
**characterized in**
**that** the casing (1) is die-cast or extruded of thermoplastic plastic material.

8. Air shutter casing device according to one of claims 1 to 5,
**characterized in**
**that** the outer casing is made of steel, sheet steel or ceramics.

9. Air shutter casing device according to one of the foregoing claims,
**characterized in**
**that** the sleeve insert (8) is die-cast or extruded of elastomer.

10. Air shutter casing device according to claim 9,
**characterized by**
an elastomer based on EP(D)M, PP or of PVC.

11. Sealing compensation element for tube arrangements, particularly in the incoming and exhaust areas of chemical industry and in the laboratory ventilation area
which is manufactured comprising the features of the sleeve insert of the air shutter casing device according to claim 1.

12. Sealing compensation element according to claim 11,
**characterized in**
**that** one thickened stop each (16, 17) is provided at the annular recessed transition area (14, 15) of the sleeve insert (8), in the longitudinal direction axially outside.

13. Sealing compensation element according to claim 11 or 12,
**characterized in**
**that** the sleeve insert (8) is provided symmetrically relative to a median plane (5) through the spherical zone (9).

14. Sealing compensation element according to one of claims 11 to 13,
**characterized in**
**that** the sleeve insert (8) is made of a chemical-resistant polymer.

15. Sealing compensation element according to claim 14,
**characterized by**
a polymer based on EP(D)M or PP or of PVC.

## Revendications

1. Ensemble boîtier de volet de ventilation comprenant un boîtier (1) dans lequel une lame de volet réglable (6) est disposée entre deux ouvertures de passage (3, 4)
le boîtier (1) présentant une zone entre les deux ouvertures (3, 4),
zone dans laquelle une doublure élastique formant manchon (8) est emboîtée avec un ajustement de précision et immobilisée en translation,
la doublure formant manchon (8) étant conçue avec une zone centrale (9) qui, dans l'état emboîté, est pour l'essentiel entourée par la zone du boîtier (1),
ensemble dans lequel, sur la zone centrale (9) de la doublure formant manchon (8), sur deux côtés opposés sont formés des tubulures ou embouts cylindriques (10, 11) qui, dans l'état emboîté de la doublure formant manchon, émergent chacun au-delà de l'une des ouvertures de passage (3, 4) du boîtier,
et dans lequel la doublure formant manchon (8) reçoit la lame de volet (6) mobile en rotation, laquelle, dans une position fermée, est appliquée à joint étanche contre une paroi intérieure de la zone centrale (8) de la doublure formant manchon (8) et, ainsi, isole hermétiquement les deux tubulures (10, 11) ou embouts l'un(e) de l'autre,
**caractérisé**
**en ce que** le boîtier (1) est pour l'essentiel constitué d'une zone sphérique,
**en ce que** la zone centrale (9) de la doublure formant manchon (8) est une zone sphérique et
**en ce que**, entre la zone sphérique (9) de la doublure formant manchon (8) et chacun(e) des tubulures (10, 11) ou embouts de la doublure formant manchon (8), est formée une région de transition annulaire creusée (14, 15) qui, dans l'état emboîté de la doublure formant manchon (8), est disposée au niveau de l'une des ouvertures de passage (4, 5) du boîtier (1), et
forme à chaque fois une région de déformation principale lorsque la tubulure (10, 11) ou l'embout de la doublure formant manchon est mise sous contrainte.

2. Ensemble boîtier de volet de ventilation (1),
**caractérisé en ce que** la zone sphérique du boîtier (1) et celle (9) de la doublure formant manchon (8) sont disposées symétriquement par rapport à un plan médian commun (5) et **en ce qu'**un axe de rotation imaginaire de la lame de volet (6) s'étend dans le plan médian, transversalement à la direction longitudinale de l'ensemble de boîtier de volet de ventilation.

3. Ensemble boîtier de volet de ventilation selon la revendication I ou 2,
**caractérisé**
**en ce qu'**un palier d'extrémité (8) et un passage d'arbre (19) sont disposés dans des régions extérieures opposées de la doublure formant manchon (8), transversalement à la direction longitudinale.

4. Ensemble boîtier de volet de ventilation selon la revendication 3,
**caractérisé**
**en ce que** le boîtier (1) présente un palier d'arbre de volet (21) qui, dans l'état emboîté de la doublure formant manchon (8), est aligné avec le passage d'arbre (19) de cette doublure, et présente aussi à l'opposé un palier d'extrémité élargi (20) qui reçoit le palier d'extrémité (18) de la doublure formant manchon (8).

5. Ensemble boîtier de volet de ventilation selon l'une des revendications 1 à 4,
**caractérisé**
**en ce que**, dans les régions de transition de la doublure formant manchon (8) creusées de forme annulaire (14, 15) entre l'une des tubulures (10, 11) ou l'un des manchons et la zone sphérique (9), s'ajuste à chaque fois un bourrelet (12, 13) prévu le long du bord intérieur des ouvertures de passage (3, 4) du boîtier,

6. Ensemble boîtier de volet de ventilation selon la revendication 5,
**caractérisé**
**en ce que**, dans la région de transition creusée de forme annulaire (14, 15) de la doublure formant manchon (8) est formée à chaque fois une butée renflée (16, 17) prévue axialement à l'extérieur dans la direction longitudinale.

7. Ensemble boîtier de volet de ventilation selon l'une des revendications précédentes,
**caractérisé**
**en ce que** le boîtier est moulé en matière thermoplastique, par injection ou par extrusion.

8. Ensemble boîtier de volet de ventilation selon l'une des revendications 1 à 5,
**caractérisé**
**en ce que** le boîtier extérieur est en acier, en tôle d'acier ou en matière céramique.

9. Ensemble boîtier de volet de ventilation selon l'une des revendications précédentes,
**caractérisé en ce que**
la doublure formant manchon (8) est moulée en élastomère par injection ou par extrusion.

10. Ensemble boîtier de volet de ventilation selon la revendication 9,
**caractérisé par**
un élastomère à base de EP(D)M, PP ou en PVC.

11. Elément de compensation de dilatation pour ensemble de canalisation, en particulier dans le domaine de l'aération et de l'évacuation d'air de l'industrie chimique, ou dans le domaine de la ventilation des laboratoires,
qui est réalisé avec les caractéristiques de la doublure formant manchon de l'ensemble de boîtier de ventilation selon la revendication 1.

12. Elément de compensation de dilatation selon la revendication 11,
**caractérisé**
**en ce que**, dans la région de transition creusée de forme annulaire (14, 15) de la doublure formant manchon (8), est formée à chaque fois une butée renflée (16, 17) prévue axialement à l'extérieur dans la direction longitudinale.

13. Elément de compensation de la dilatation selon la revendication 11 ou 12,
**caractérisé**
**en ce que** la doublure formant manchon (8) est réalisée symétriquement par rapport à un plan médian (5) de la zone sphérique (9).

14. Elément de compensation de la dilatation selon l'une des revendications 11 à 13,
**caractérisé**
**en ce que** la doublure formant manchon (8) est faite d'un polymère résistant aux substances chimiques.

15. Elément de compensation de dilatation selon la revendication 14,
**caractérisé par**
un polymère à base de EP(D)M, PP ou PVC.
